(19) Europäisches Patentamt
European Patent Office
Office européen des brevets

(11) **EP 3 601 376 B1**

(12) **EUROPEAN PATENT SPECIFICATION**

(45) Date of publication and mention
of the grant of the patent:
**28.04.2021 Bulletin 2021/17**

(21) Application number: **18709007.1**

(22) Date of filing: **07.03.2018**

(51) Int Cl.:
*C08F 2/00* [(2006.01)]        *C08F 2/01* [(2006.01)]
*C08F 2/34* [(2006.01)]        *C08L 23/10* [(2006.01)]

(86) International application number:
**PCT/EP2018/055537**

(87) International publication number:
**WO 2018/177701 (04.10.2018 Gazette 2018/40)**

(54) **PROCESS FOR GAS-PHASE POLYMERIZATION OF OLEFINS**

VERFAHREN ZUR GASPHASENPOLYMERISATION VON OLEFINEN

PROCÉDÉ DE POLYMÉRISATION EN PHASE GAZEUSE D'OLÉFINES

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **27.03.2017 EP 17162954**

(43) Date of publication of application:
**05.02.2020 Bulletin 2020/06**

(73) Proprietor: **Basell Poliolefine Italia S.r.l.
20121 Milano (IT)**

(72) Inventors:
• **MEI, Gabriele
Channelview, TX 77530 (US)**
• **MAZZUCCO, Antonio
44122 Ferrara (IT)**

• **CAPUTO, Tiziana
44122 Ferrara (IT)**
• **BALESTRA, Enrico
44122 Ferrara (IT)**
• **TARTARI, Davide
44122 Ferrara (IT)**
• **MASSARI, Paola
44122 Ferrara (IT)**

(74) Representative: **LyondellBasell
c/o Basell Poliolefine Italia
Intellectual Property
P.le Donegani 12
44122 Ferrara (IT)**

(56) References cited:
**EP-A1- 1 012 195          WO-A1-2006/067052
WO-A1-2009/080660          WO-A1-2012/031986**

EP 3 601 376 B1

## Description

FIELD OF THE INVENTION

The present disclosure relates to a gas-phase process for the preparation of heterophasic propylene copolymer compositions.

BACKGROUND OF THE INVENTION

The development of Ziegler-Natta olefin polymerization catalysts having high activity and selectivity, has led to the widespread use on an industrial scale of processes in which the polymerization of olefins is carried out in a gaseous medium in the presence of a solid catalyst.

A widely used technology for gas-phase polymerization processes is the fluidized bed technology. In fluidized bed gas-phase processes, the polymer is confined in a vertical cylindrical zone, the so-called polymer bed. The reaction gases exiting the reactor are taken up by a compressor, cooled and sent back, together with make-up monomers and appropriate quantities of hydrogen, to the bottom of the polymer bed through a distribution plate. Entrainment of solid from the gas exiting the reactor is limited by an appropriate dimensioning of the upper part of the reactor termed freeboard (i.e. the space between the upper bed surface and the gas exit point), where the gas velocity is reduced and, in some designs, by the interposition of cyclones in the gases exit line. The flow rate of the circulating gaseous monomers is set so as to assure a velocity within an adequate range above the minimum fluidization velocity and below the "transport velocity". The heat of reaction is removed exclusively by cooling the circulating gas. The composition of the gas-phase controls the composition of the polymer, while the reaction kinetics is controlled by the addition of inert gases.

Since fluidized bed reactors approximate very closely the ideal behavior of a "continuous stirred-tank reactor" (CSTR), it is very difficult to obtain products which are a homogeneous mixture of different types of polymeric chains. In fact, the composition of the gaseous mixture that is in contact with the growing polymer particle is essentially the same for all the residence time of the particle in the reactor.

A gas-phase process for the olefin polymerization, which represents a gas-phase technology alternative to the fluidized bed reactor technology, is disclosed in Applicant's earlier patent EP1012195B1 or WO2009/080660 This polymerization process, called multizone circulating reactor (MZCR), is carried out in a gas-phase reactor having two interconnected polymerization zones. The polymer particles flow upwards through a first polymerization zone, denominated "riser", under fast fluidization or transport conditions, leave said riser and enter a second polymerization zone, denominated "downcomer", through which they flow in a densified form under the action of gravity. A continuous circulation of polymer is established between the riser and the downcomer.

According to the description of EP1012195B1 it is possible to obtain, within the polymerization apparatus disclosed therein, two polymerization zones with different composition by feeding a gas/liquid stream, denominated "barrier stream", to the upper part of the downcomer. Said gas/liquid stream acts as a barrier to the gas phase coming from the riser, and is capable to establish a net gas flow upward in the upper portion of the downcomer. The established flow of gas upward has the effect of preventing the gas mixture present in the riser from entering the downcomer.

The polymerization process, described in detail in EP1012195B1, reveals particularly useful for preparing, in a single reactor, broad molecular weight olefin polymers and, particularly, multimodal olefin polymers whereby the term multimodal refers to the modality of the molecular weight distribution. As used in the art, and also used herein, multimodal shall include bimodal. Such polymers can be obtained from polymerizing olefins in a cascade of two or more polymerization reactors or in different zones of a MZCR reactor under different reaction conditions. Thus, the "modality" indicates how many different polymerization conditions were utilized to prepare the polyolefin, independently whether this modality of the molecular weight distribution can be recognized as separated maxima in a gel permeation chromatography (GPC) curve or not. In addition to the molecular weight distribution, the olefin polymer can also have a comonomer distribution. In an embodiment the average comonomer content of polymer chains with a higher molecular weight is higher than the average comonomer content of polymer chains with a lower molecular weight. It is however also possible to employ identical or very similar reaction conditions in all polymerization reactors of the reaction cascade and so prepare narrow molecular weight or monomodal olefin polymers.

WO2011/144489 describes the preparation of heterophasic propylene copolymer compositions (RAHECO) comprising a random propylene copolymer (RACO) and an elastomeric propylene copolymer (BIPO) with a MZCR polymerization process as described in EP1012195B1, wherein the RACO is produced in the downcomer and the BIPO in the riser. However this approach for producing RAHECO in a MZCR has drawbacks, including low reliability and significant throughput limitation insofar as the minority component (BIPO) is produced in the reactor zone with the lower productivity. Moreover, there exist limitations in obtaining RAHECO having high melt flow rate and, at the same time, a high molecular weight BIPO component.

It is thus desirable to provide an improved process for the preparation of RAHECO in a MZCR polymerization reactor with high throughput, high reliability and with increased ability to obtain high melt flow rate RAHECO with a high molecular weight BIPO component.

## SUMMARY OF THE INVENTION

The present disclosure provides a process for the preparation of heterophasic propylene copolymer compositions (RAHECO) comprising a random propylene copolymer (RACO) and an elastomeric propylene copolymer (BIPO), the process being carried out in a reactor having two interconnected polymerization zones, a riser and a downcomer, wherein the growing polymer particles:

(a) flow through the first of said polymerization zones, the riser, under fast fluidization conditions in the presence of propylene and of ethylene and/or an alpha-olefin having from 4 to 10 carbon atoms, thus obtaining the random propylene copolymer (RACO);

(b) leave the riser and enter the second of said polymerization zones, the downcom-er, through which they flow downward in a densified form in the presence of propylene and of ethylene and/or an alpha-olefin having from 4 to 10 carbon atoms, wherein the concentration of ethylene and/or of the alpha-olefin in the downcomer is higher than in the riser, thus obtaining the elastomeric propylene copolymer (BIPO);

(c) leave the downcomer and are reintroduced into the riser, thus establishing a circulation of polymer between the riser and the downcomer.

## BRIEF DESCRIPTION OF THE DRAWINGS

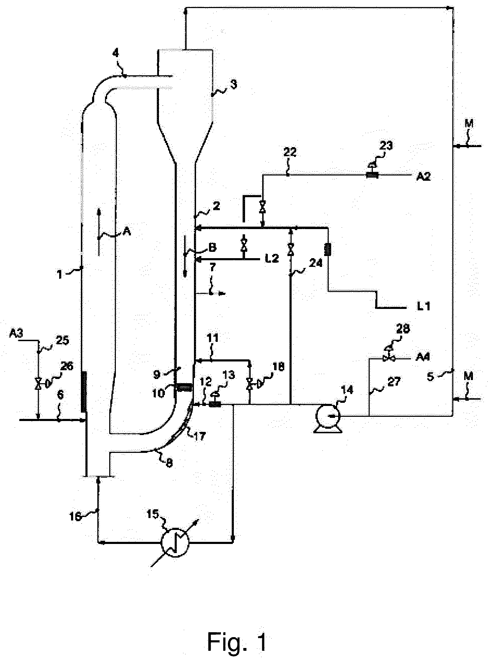

Figure 1 depicts schematically a set-up of a gas-phase MZCR having two interconnected polymerization zones for carrying out the polymerization process of the present disclosure, without however restricting the invention to the embodiments illustrated therein.

## DETAILED DESCRIPTION OF THE INVENTION

In the first polymerization zone (riser), fast fluidization conditions are established by feeding a gas mixture comprising one or more alpha-olefins at a velocity higher than the transport velocity of the polymer particles. The velocity of said gas mixture is generally comprised between 0.5 and 15 m/s, preferably between 0.8 and 5 m/s. The terms "transport velocity" and "fast fluidization conditions" are well known in the art; for a definition thereof, see, for example, "D. Geldart, Gas Fluidisation Technology, page 155 et seq., J. Wiley & Sons Ltd., 1986".

In the second polymerization zone (downcomer), the polymer particles flow under the action of gravity in a densified form, so that high values of density of the solid (mass of polymer per volume of reactor) are achieved, said density of solid approaching the bulk density of the polymer. Throughout the present description a "densified form" of the polymer implies that the ratio between the mass of polymer particles and the reactor volume is higher than 80% of the "poured bulk density" of the obtained polymer. The "poured bulk density" of a polymer is a parameter well known to the person skilled in the art. In view of the above, it is clear that in the downcomer the polymer flows downward in a plug flow and only small quantities of gas are entrained with the polymer particles.

According to the process of the present invention, the two interconnected polymerization zones are operated in such a way that the gas mixture coming from the riser is totally or partially prevented from entering the downcomer by introducing into the upper part of the downcomer a liquid and/or gas stream, denominated "barrier stream", having a composition different from the gaseous mixture present in the riser. In order to comply with this process feature, one or more feeding lines for the barrier stream are placed in the downcomer close to the upper limit of the volume occupied by the polymer particles flowing downward in a densified form.

This liquid/gas mixture fed into the upper part of the downcomer partially replaces the gas mixture entrained with the polymer particles entering the downcomer. The partial evaporation of the liquid in the barrier stream generates in the upper part of the downcomer a flow of gas, which moves counter-currently to the flow of descendent polymer, thus acting as a barrier to the gas mixture coming from the riser and entrained among the polymer particles. The liquid/gas barrier fed to the upper part of the downcomer can be sprinkled over the surface of the polymer particles: the evaporation of the liquid will provide the required upward flow of gas.

The feed of the barrier stream causes a difference in the concentrations of monomers and/or hydrogen (molecular weight regulator) inside the riser and the downcomer, so that a bimodal polymer can be produced.

It is known that in a gas-phase polymerization process the reaction mixture comprises, besides the gaseous monomers, also inert polymerization diluents and chain transfer agents, such as hydrogen, useful to regulate the molecular weight of the obtained polymeric chains. The polymerization diluents are preferably selected from C2-C8 alkanes, preferably propane, isobutane, isopentane and hexane. Propane is preferably used as the polymerization diluent in the gas-phase polymerization of the invention, so that liquid propane is unavoidably contained in the barrier stream, which is fed to the upper part of the downcomer.

In one embodiment, the barrier steam comprises:

   i. from 10 to 100% by mol of propylene;

   ii. from 0 to 80% by mol of ethylene;

   iii. from 0 to 30% by mol of propane;

   iv. from 0 to 5% by mol of hydrogen.

The above indicated compositions of barrier stream can be obtained from the condensation of a part of the fresh monomers and propane, said condensed part being fed to the upper part of the downcomer in a liquid form. According to an embodiment, the above suitable compositions of barrier stream derive from condensation and/or distillation of part of a gaseous stream continuously recycled to the reactor having two interconnected polymerization zones.

Additional liquid and/or gas of suitable composition can be fed along the downcomer at a point below the barrier stream.

The recycle gas stream is generally withdrawn from a gas/solid separator placed downstream the riser, cooled by passage through an external heat exchanger and then recycled to the bottom of the riser. Of course, the recycle gas stream comprises, besides the gaseous monomers, also the inert polymerization components, such as propane, and chain transfer agents, such as hydrogen. Moreover, the composition of the barrier stream deriving from condensation and/or distillation of the gas recycle stream may be suitably adjusted by feeding liquid make-up monomers and propane before its introduction into the upper part of downcomer.

The operating parameters of temperature and pressure are those that are usual in gas-phase catalytic polymerization processes. For example, in both riser and downcomer the temperature is generally comprised between 60 °C and 120 °C, while the pressure can range from 5 to 40 bar.

The process of the present invention will now be described in detail with reference to the enclosed Figure 1, which is a diagrammatic representation and has to be considered illustrative and not limitative of the scope of the invention.

The polymerization reactor shown in Figure 1 comprises a first polymerization zone 1 (riser), wherein the polymer particles flow upward under fast fluidization conditions along the direction of the arrow A and a second polymerization zone 2 (downcomer), wherein the polymer particles flow downward under the action of gravity along the direction of the arrow B.

The upper portion of the riser 1 is connected to a solid/gas separator 3 by the interconnection section 4. The separator 3 removes the major part of the unreacted monomers from the polymer particles and the polymer withdrawn from the bottom of separator 3 enters the top portion of the downcomer 2. The separated unreacted monomers, optionally together with polymerization diluents, such as propane, flow up to the top of separator 3 and are successively recycled to the bottom of the riser 1 via the recycle line 5.

A mixture comprising one or more olefin monomers, hydrogen as the molecular weight regulator and propane as the polymerization diluent, is fed to the polymerization reactor via one or more lines M, which are suitably placed along the gas recycle line 5, according to the knowledge of the person skilled in art.

The catalyst components, optionally after a prepolymerization step, are continuously introduced into the riser 1 via line 6. The produced polymer can be discharged from the reactor via a line 7, which can be placed on the lower portion of the downcomer 2 so that, due to the packed flow of densified polymer, the quantity of gas entrained with the discharged polymer is minimized. By inserting a control valve (not shown) on the polymer discharge line 7, it becomes possible to continuously control the flow rate of polymer produced by the polymerization reactor. Additional polymer discharge lines can be placed in the bottom part of the downcomer (not shown).

The polymerization reactor further comprises a transport section 8 connecting the bottom of downcomer 2 with the lower region of the riser 1. The bottom of the downcomer 2 converges into a slight restriction 9. A control valve 10 with an adjustable opening can be placed within the restriction 9. The flow rate Fp of polymer continuously circulated between the downcomer 2 and the riser 1 is adjusted by the level of opening of the control valve 10. The control valve 10 may be a mechanical valve, such as a butterfly valve, a ball valve, etc. A stream of dosing gas is fed into the lower part of the downcomer 2 by means of a line 11 placed at a short distance above the restriction 9. The dosing gas to be introduced through line 10 can be taken from the recycle line 5. In synthesis, the flow Fp of polymer particles circulated between downcomer 2 and riser 1 can be adjusted by varying the opening of the control valve 10 at the bottom of the downcomer and/or by varying the flow rate of the dosing gas entering the downcomer via line 11. The flow rate of dosing gas is adjusted by means of a control valve 18, which is suitably arranged on line 11.

The transport section 8 is designed as a bend descending from the bottom of downcomer 2 up to the lower region of the riser 1. Furthermore, a carrier gas is introduced via line 12 at the inlet of the transport section 8. The flow rate of carrier gas is adjusted by means of a control valve 13, which is suitably arranged on line 12.

The carrier gas can also be taken from the gas recycle line 5. Specifically, the gas recycle stream of line 5 is first subjected to compression by means of a compressor 14 and a minor percentage of the recycle stream passes through line 12, thus entering the transport section 8 and diluting the solid phase of polymer flowing through the transport section 8. The major part of the recycle stream, downstream the compressor 14, is subjected to cooling in a heat exchanger 15 and successively is introduced via line 16 at the bottom of the riser 1 at a high velocity, such to ensure fast fluidization conditions in the polymer bed flowing along the riser 1.

The carrier gas merges with the densified polymer coming from downcomer 2 at the inlet portion of transport section 8, after exiting the slits of the gas distribution grid 17. In the embodiment shown in Figure 1 the top end of the distribution grid 17 is coincident with the inlet of the transport section 8 and the distribution grid 17 extends along the bending of the transport section 8 for an angle $\alpha=60°$. The gas distribution grid 17 is formed by a plurality of trays fixed to the transport section 8 in a way to form slits in the overlapping area of adjacent trays. A detailed description of the gas distribution grid 17 can be found in WO 2012/031986.

Hydrogen and the comonomer(s) ethylene and/or C4-C10 alpha-olefin are pre-dispersed either in the liquid monomer L1 and/or L2 as described above or alternatively in a fraction of recycle gas taken from recycle line 5 via line 24, and then fed to the reactor (flow rate A2, line 22 metered by one or more valves 23).

As described in WO 2011/029735, flow rates of antistatic composition may be fed into the reactor at the bottom of the riser (flow rate A3, line 25 metered by valve 26) or into the main gas recycle line 5 (flow rate A4, line 27 metered by valve 28).

The polymerization reactor can be operated by properly adjusting the polymerization conditions and the concentration of monomers and hydrogen in the riser and in the downcomer, so as to tailor the obtainable RAHECO. To this purpose, the gas mixture entraining the polymer particles and coming from the riser can be partially or totally prevented from entering the downcomer, so as to polymerize two different monomers compositions in the riser and the downcomer. This effect may be achieved by feeding a gaseous and/or liquid barrier stream through a line placed in the upper portion of the downcomer. The barrier stream should have a composition different from the gas composition present inside the riser. The flow rate of the barrier stream can be adjusted, so that an upward flow of gas counter-current to the flow of the polymer particles is generated, particularly at the top of the downcomer, thus acting as a barrier to the gas mixture coming from the riser. For further details regarding this barrier effect at the top of the downcomer, reference is made to the disclosure of EP 1012195 A1.

The process of the invention increases the ability to obtain high a melt flow rate RAHECO with a high molecular weight BIPO component. In fact, by feeding appropriate quantities of hydrogen in the riser, it is possible to lower the molecular weight of the RACO component to a great extent and, consequently, to obtain a final RAHECO with quite high melt flow rate. At the same time, feeding a barrier stream with little/no hydrogen allows to obtain in the downer a high molecular weight BIPO component.

According to an embodiment, the reactor having two interconnected polymerization zones can be placed upstream or downstream one or more other polymerization reactors based on conventional liquid- and/or gas-phase technologies, thus giving rise to a sequential multistage polymerization process. For instance, a fluidised bed reactor can be used to prepare a first polymer component, which is successively fed to the gas-phase reactor of Figure 1 to prepare a second and a third polymer component.

The process of the invention can be carried out by using customary olefin polymerization catalysts, particularly titanium-based Ziegler-Natta-catalysts, Phillips catalysts based on chromium oxide, single-site catalysts. For the purposes of the present disclosure, single-site catalysts are catalysts based on chemically uniform transition metal coordination compounds, such as metallocene catalysts. Furthermore, it is also possible to use mixtures of two or more different catalysts. Such mixed catalyst systems may be designated as hybrid catalysts.

According to an embodiment, the process of the invention can be carried out in the presence of Ziegler-Natta catalysts comprising:

    i. a solid catalyst component comprising Mg, Ti, an halogen and an electron donor compound (internal donor),

    ii. an alkylaluminum compound, and

    iii. optionally, an electron-donor compound (external donor).

Component (i) can be prepared by contacting a magnesium halide, a titanium compound having at least a Ti-halogen bond, and optionally an electron donor compound. The magnesium halide can be $MgCl_2$ in active form which is widely known from the patent literature as a support for Ziegler-Natta catalysts. The titanium compounds can be $TiCl_4$ or TiCls. Ti-haloalcoholates of formula $Ti(OR)_{n-y}X_y$, where n is the valence of titanium, y is a number between 1 and n-1 X is halogen and R is a hydrocarbon radical having from 1 to 10 carbon atoms, can also be used.

Electron donor compounds for preparing Ziegler type catalysts are for example alcohols, glycols, esters, ketones, amines, amides, nitriles, alkoxysilanes and aliphatic ethers. These elec¬tron donor compounds can be used alone or in mixtures with other electron donor compounds.

Other solid catalyst components which may be used are those based on a chromium oxide supported on a refractory oxide, such as silica, and activated by a heat treatment. Catalysts obtainable from those components consist of chromium (VI) trioxide chemically fixed on silica gel. These catalysts are produced under oxidizing conditions by heating the silica gels that have been doped with chromium(III)salts (precursor or precatalyst). During this heat treatment, the chromium(III) oxidizes to chromium(VI), the chromium(VI) is fixed and the silica gel hydroxyl group is eliminated as water.

Still other solid catalyst components which may be used are single-site catalysts supported on a carrier, such as metallocene catalysts, comprising:

i. at least a transition metal compound containing at least one n bond; and

ii. at least a cocatalyst selected from an alumoxane or a compound able to form an alkyl-metallocene cation.

According to embodiments of the disclosure, when the catalyst includes an alkylaluminum compound, such as in Ziegler-Natta catalysts, the molar ratio of solid catalyst component to alkylaluminum compound introduced into the polymerization reactor is from 0.05 to 3, or from 0.1 to 2, or from 0.5 to 1.

The catalysts may be optionally subjected to prepolymerization before being fed to the polymerization reactor. In an embodiment the prepolymerization occurs in a loop reactor, The prepolymerization of the catalyst system may be carried out at a low temperature, in a range of from 0°C to 60 °C.

Conventional additives, fillers and pigments, commonly used in olefin polymers, may be added, such as nucleating agents, extension oils, mineral fillers, and other organic and inorganic pigments. In particular, the addition of inorganic fillers, such as talc, calcium carbonate and mineral fillers, also brings about an improvement to some mechanical properties, such as flexural modulus and HDT. Talc can also have a nucleating effect.

The nucleating agents are added to the compositions of the present invention in quantities ranging from 0.05 to 2% by weight, more preferably from 0.1 to 1% by weight, with respect to the total weight, for example.

EXAMPLES

The following examples are given to illustrate the present invention without any limiting purpose.

**Test Methods**

Melt flow rate (MFR "L"1

Determined according to ISO 1133 (230°C, 2.16 Kg)

$^{13}$C NMR of propylene/ethylene copolymers

$^{13}$C NMR spectra were acquired on a Bruker AV-600 spectrometer equipped with cryoprobe, operating at 160.91 MHz in the Fourier transform mode at 120 °C.

The peak of the $S_{\beta\beta}$ carbon (nomenclature according to "Monomer Sequence Distribution in Ethylene-Propylene Rubber Measured by 13C NMR. 3. Use of Reaction Probability Mode " C. J. Carman, R. A. Harrington and C. E. Wilkes, Macromolecules, 1977, 10, 536) was used as internal reference at 29.9 ppm. The samples were dissolved in 1,1,2,2-tetrachloroethane-d2 at 120 °C with a 8 % wt/v concentration. Each spectrum was acquired with a 90°pulse, 15 seconds of delay between pulses and CPD to remove 1 H-13C coupling. 512 transients were stored in 32K data points using a spectral window of 9000 Hz.

The assignments of the spectra, the evaluation of triad distribution and the composition were made according to Kakugo ("Carbon-13 NMR determination of monomer sequence distribution in ethylene-propylene copolymers prepared with δ-titanium trichloride- diethylaluminum chloride" M. Kakugo, Y. Naito, K. Mi-zunuma and T. Miyatake, Macromolecules, 1982, 15, 1150) using the following equations:

$$PPP = 100 \ T\beta\beta/S \qquad PPE = 100 \ T\beta\delta/S \qquad EPE = 100 \ T\delta\delta/S$$

$$PEP = 100 \ S\beta\beta/S \qquad PEE = 100 \ S\beta\delta/S \qquad EEE = 100 \ (0.25 \ S\gamma\delta + 0.5 \ S\delta\delta)/S$$

$$S = T\beta\beta + T\beta\delta + T\delta\delta + S\beta\beta + S\beta\delta + 0.25 \ S\gamma\delta + 0.5 \ S\delta\delta$$

The molar percentage of ethylene content was evaluated using the following equation:

$$E\% \ mol = 100 * [PEP+PEE+EEE]$$

The weight percentage of ethylene content was evaluated using the following equation:

$$E\% \ wt. = \frac{100 * E\% \ mol * MWE}{E\% \ mol * MWE + P\% \ mol * MWP}$$

where P% mol is the molar percentage of propylene content, while MWE and MWP are the molecular weights of ethylene and propylene, respectively.

The product of reactivity ratio r1r2 was calculated according to Carman (C.J. Carman, R.A. Harrington and C.E. Wilkes, Macromolecules, 1977; 10, 536) as:

The tacticity of Propylene sequences was calculated as mm content from the ratio of the PPP $mmT_{\beta\beta}$ (28.90-29.65 ppm) and the whole $mmT_{\beta\beta}$ (29.80-28.37 ppm)

Xylene-Soluble fraction (XS)

The Xylene-Soluble fraction (XS) was measured according to ISO 16152:2005, but with the following deviations:

- the volume of the polymer solution was 250 mL instead of 200 mL;
- the precipitation stage was carried out at 25°C for 30 minutes, but for the final 10 minutes the polymer solution was kept under stirring by a magnetic stirrer instead of no stirring at all;
- the final drying step was done under vacuum at 70°C instead of 100 °C.

The XS is expressed as a weight percentage of the original 2.5 grams of polymer.

Intrinsic Viscosity of Xylene Soluble fraction (XSIV)

Determined in tetrahydronaphthalene at 135°C.

Flexural modulus (MEF)

Determined according to ISO 178.

Melting temperature (Tm) and crystallization temperature (Tc)

Both determined by differential scanning calorimetry (DSC) according to the ASTM D 3417 method, which is equivalent to the ISO 11357/1 and 3 method.

**Example 1 (invention)**

Preparation of the Ziegler-Natta solid catalyst component

The Ziegler-Natta catalyst was prepared according to Example 5, lines 48-55, of the European Patent EP728769B1.

Preparation of the catalyst system - Precontact

Before introducing it into the polymerization reactors, the solid catalyst component described above is contacted with aluminum-triethyl (TEAL) and with the dicyclopentyldimethoxysilane (D donor) under the conditions reported in Table 1.

Prepolymerization

The catalyst system is then subject to prepolymerization treatment at 20°C by maintaining it in suspension in liquid propylene for a residence time of 9 minutes before introducing it into the polymerization reactor.

Polymerization

The polymerization was carried out in gas-phase polymerization reactor comprising two interconnected polymerization zones, a riser and a downcomer, as described in European Patent EP782587. Hydrogen was used as molecular weight regulator. The polymer particles exiting from the polymerization step were subjected to a steam treatment to remove the unreacted monomers and dried under a nitrogen flow.

The main precontact, prepolymerization and polymerization conditions and the quanti-ties of monomers and hydrogen fed to the polymerization reactor are reported in Table 1. Characterization data for the obtained polymers are reported in Table 2.

**Example 4C (comparative)**

It was worked as in example 1, except that the polymerization was carried out according to the procedure disclosed in WO2011/144489, i.e. the RACO is produced in the downcomer and the BIPO in the riser.

The main precontact, prepolymerization and polymerization conditions and the quantities of monomers and hydrogen fed to the polymerization reactor are reported in Table 1. Characterization data for the obtained polymers are reported in Table 2.

By comparing the results of Example 2 with those of Comparative Example 4C it can be seen that, for comparable melt flow rate of the RAHECO, the process of the invention allows to obtain a BIPO component with a higher molecular weight.

**Table 1** - **Process conditions**

| Example | | 1 | 2 | 3 | 4C |
|---|---|---|---|---|---|
| **PRECONTACT** | | | | | |
| Temperature | °C | 15 | 15 | 15 | 15 |
| Residence Time | min | 13 | 13 | 15 | 13 |
| TEAL/catalyst | wt/wt | 6 | 6 | 6 | 5 |
| TEAL/Ext. Donor | g\g | 4 | 4 | 4 | 4 |
| **PREPOLYMERIZATION** | | | | | |
| Temperature | °C | 20 | 20 | 20 | 25 |
| Residence Time | min | 8 | 8 | 9 | 11 |
| **POLYMERIZATION** | | | | | |
| Temperature | bar-g | 63 | 63 | 65 | 65 |
| Pressure | bar-g | 23 | 23 | 27 | 22 |
| Residence Time | min | 100 | 116 | 135 | 121 |
| Mileage | kg/kg | 36000 | 33000 | 34000 | 11000 |
| Ratio between actual and nominal throughput | %wt | 120 | 100 | 100 | 50 |
| Run duration | Days | >7 | >7 | >7 | 0.5 |
| Split holdup riser | wt% | 38 | 38 | 38 | 20 |

(continued)

| POLYMERIZATION | | | | | |
|---|---|---|---|---|---|
| Split holdup downcomer | wt% | 62 | 62 | 62 | 80 |
| $C_2^-/ C_2^-+C_3^-$ riser | mol/mol | 0.036 | 0.011 | 0.015 | 0.125 |
| $C_2^-/ C_2^-+C_3^-$ downcomer | mol/mol | 0.064 | 0.038 | 0.017 | 0.009 |
| $H_2/C_3^-$ riser | mol/mol | 0.070 | 0.016 | 0.244 | 0.015 |
| $H_2/C_2^-$ downcomer | mol/mol | 0.176 | 0.003 | 2.2 | 0.210 |
| Notes: $C_2^-$ = ethylene; $C_3^-$ = propylene; $H_2$= hydrogen; Split = amount of polymer prepared in the concerned reactor referred to the total weight. | | | | | |

**Table 2 - Polymer characterization**

| Example | | 1 | 2 | 3 | 4C |
|---|---|---|---|---|---|
| MFR (230°C/2.16kg) | g/10' | 2.91 | 0.14 | 27.4 | 0.48 |
| Ethylene units | %wt | 9.2 | 8.3 | 3.9 | 9.6 |
| XS | % | 27.0 | 19.6 | 7.8 | 30 |
| XSIV | dl/g | 2.44 | 5.03 | 0.77 | 2.69 |
| Flex. Mod. | MPa | 360 | 670 | 1060 | 395 |
| Tm | °C | 134.9 | 146.3 | 146.3 | 142.2 |
| Tc | °C | 87.5 | 94.7 | 96.1 | 95.3 |

**Claims**

1. A process for the preparation of heterophasic propylene copolymer compositions comprising a random propylene copolymer and an elastomeric propylene copolymer, the process being carried out in a reactor having two interconnected polymerization zones, a riser and a downcomer, wherein the growing polymer particles:

   a) flow through the first of said polymerization zones, the riser, under fast fluidization conditions in the presence of propylene and of ethylene and/or an alpha-olefin having from 4 to 10 carbon atoms, thus obtaining the random propylene copolymer;
   b) leave the riser and enter the second of said polymerization zones, the downcomer, through which they flow downward in a densified form in the presence of propylene and of ethylene and/or an alpha-olefin having from 4 to 10 carbon atoms, wherein the concentration of ethylene and/or of the alpha-olefin in the downcomer is higher than in the riser, thus obtaining the elastomeric propylene copolymer;
   c) leave the downcomer and are reintroduced into the riser, thus establishing a circulation of polymer between the riser and the downcomer.

2. The process according to claim 1, wherein the two interconnected polymerization zones are operated in such a way that the gas mixture coming from the riser is totally or partially prevented from entering the downcomer by introducing into the upper part of the downcomer a liquid and/or gas stream, denominated "barrier stream", having a composition different from the gaseous mixture present in the riser.

3. The process according to claim 2, wherein one or more feeding lines for the barrier stream are placed in the downcomer close to the upper limit of the volume occupied by the polymer particles flowing downward in a densified form.

4. The process according to claim 2 or 3, wherein the barrier steam comprises propane.

5. The process according to claim 4, wherein the barrier steam comprises:

i. from 10 to 100% by mol of propylene;
ii. from 0 to 80% by mol of ethylene;
iii. from 0 to 30% by mol of propane;
iv. from 0 to 5% by mol of hydrogen.

6. The process according to claim 5, wherein the composition of the barrier stream derives from condensation and/or distillation of part of a gaseous stream continuously recycled via a gas recycle line to the reactor having two interconnected polymerization zones.

7. The process according to any of the preceding claims, wherein flow rates of antistatic composition are fed into the reactor at the bottom of the riser or into the gas recycle line.

8. The process according to any of the preceding claims, wherein the reactor having two interconnected polymerization zones is placed upstream or downstream one or more other polymerization reactors based on conventional liquid-and/or gas-phase technologies, thus giving rise to a sequential multistage polymerization process.

9. The process according to any of the preceding claims, which is carried out in the presence of a Ziegler-Natta catalyst comprising:

   i. a solid catalyst component comprising Mg, Ti, an halogen and an electron donor compound denominated "internal donor",
   ii. an alkylaluminum compound, and
   iii. optionally, an electron-donor compound denominated "external donor".

10. The process according to claim 8, wherein the molar ratio of solid catalyst component to alkylaluminum compound introduced into the polymerization reactor is from 0.05 to 3.


**Patentansprüche**

1. Verfahren zur Herstellung von heterophasischen Propylencopolymerzusammensetzungen, umfassend ein statistisches Propylencopolymer und ein elastomeres Propylencopolymer, wobei das Verfahren in einem Reaktor mit zwei miteinander verbundenen Polymerisationszonen, einem Steigrohr und einem Fallrohr, durchgeführt wird, wobei die wachsenden Polymerpartikel:

   a) unter raschen Verwirbelungsbedingungen durch die erste der Polymerisationszonen, das Steigrohr, in Gegenwart von Propylen und Ethylen und/oder einem alpha-Olefin mit 4 bis 10 Kohlenstoffatomen fließen, wodurch das statistische Propylencopolymer erhalten wird;
   b) das Steigrohr verlassen und in die zweite der Polymerisationszonen, das Fallrohr, eintreten, durch das sie in einer verdichteten Form in Anwesenheit von Propylen und von Ethylen und/oder eines alpha-Olefins mit 4 bis 10 Kohlenstoffatomen abwärts fließen, wobei die Konzentration von Ethylen und/oder dem alpha-Olefin in dem Fallrohr höher als in dem Steigrohr ist, wodurch das elastomere Propylencopolymer erhalten wird;
   c) das Fallrohr verlassen und erneut in das Steigrohr eingebracht werden, wodurch eine Zirkulation von Polymer zwischen dem Steigrohr und dem Fallrohr eingerichtet wird.

2. Verfahren nach Anspruch 1, wobei die zwei miteinander verbundenen Polymerisationszonen in einer solchen Weise betrieben werden, dass die aus dem Steigrohr kommende Gasmischung ganz oder teilweise daran gehindert wird, in das Fallrohr einzutreten, indem in den oberen Teil des Fallrohrs ein Flüssigkeits- und/oder Gasstrom eingebracht wird, der als "Barrierestrom" bezeichnet wird und eine Zusammensetzung aufweist, die sich von der in dem Steigrohr vorhandenen gasförmigen Mischung unterscheidet.

3. Verfahren nach Anspruch 2, wobei eine oder mehrere Speiseleitungen für den Barrierestrom in dem Fallrohr nahe der oberen Grenze des Volumens platziert wird bzw. werden, das durch die Polymerpartikel besetzt wird, die in einer verdichteten Form abwärts fließen.

4. Verfahren nach Anspruch 2 oder 3, wobei der Barrierestrom Propan umfasst.

5. Verfahren nach Anspruch 4, wobei der Barrierestrom umfasst:

i. 10 bis 100 Mol% Propylen;
ii. 0 bis 80 Mol% Ethylen;
iii. 0 bis 30 Mol% Propan;
iv. 0 bis 5 Mol% Wasserstoff.

6. Verfahren nach Anspruch 5, wobei die Zusammensetzung des Barrierestroms aus derKondensation und/oder Destillation eines Teils eines gasförmigen Stroms abgeleitet ist, der kontinuierlich mittels einer Gasrückführleitung in den Reaktor mit zwei miteinander verbundenen Polymerisationszonen zurückgeführt wird.

7. Verfahren nach einem der vorhergehenden Ansprüche, wobei Flussraten mit antistatischer Zusammensetzung am Boden des Steigrohrs in den Reaktor oderin die Gasrückführleitung eingespeist werden.

8. Verfahren nach einem der vorhergehenden Ansprüche, wobei der Reaktor, der zwei miteinander verbundene Polymerisationszonen aufweist, stromaufwärts oder stromabwärts von einem oder mehreren anderen Polymerisationsreaktoren platziert wird, die auf konventionellen Flüssig- und/oder Gasphasentechnologien basieren, was zu einem sequentiellen mehrstufigen Polymerisationsverfahren führt.

9. Verfahren nach einem der vorhergehenden Ansprüche, das in Gegenwart eines Ziegler-Natta-Katalysators durchgeführt wird, welcher umfasst:

   i. eine feste Katalysatorkomponente, die Mg, Ti, ein Halogen und eine Elektronendonorverbindung umfasst, die als "interner Donor" bezeichnet wird,
   ii. eine Alkylaluminiumverbindung und
   iii. gegebenenfalls eine Elektronendonorverbindung, die als "externer Donor"bezeichnet wird.

10. Verfahren nach Anspruch 8, wobei das Molverhältnis von fester Katalysatorkomponente zu Alkylaluminiumverbindung, die in den Polymerisationsreaktor eingebracht werden, 0,05 bis 3 beträgt.

## Revendications

1. Procédé de préparation de compositions hétérophasiques de copolymère de propylène comprenant un copolymère statistique de propylène et un copolymère de propylène élastomère, le procédé étant effectué dans un réacteur présentant deux zones de polymérisation interconnectées, une colonne montante et une colonne descendante, les particules de polymère en croissance :

   a) s'écoulant à travers la première desdites zones de polymérisation, la colonne montante, dans des conditions de fluidisation rapide en présence de propylène et d'éthylène et/ou d'une alpha-oléfine comprenant 4 à 10 atomes de carbone, ce qui permet d'obtenir le copolymère statistique de propylène ;
   b) quittant la colonne montante et entrant dans la deuxième desdites zones de polymérisation, la colonne descendante, à travers laquelle elles s'écoulent vers le bas sous une forme densifiée en présence de propylène et d'éthylène et/ou d'une alpha-oléfine comprenant 4 à 10 atomes de carbone, la concentration en éthylène et/ou en alpha-oléfine dans la colonne descendante étant plus élevée que celle dans la colonne montante, ce qui permet d'obtenir le copolymère de propylène élastomère ;
   c) quittant la colonne descendante et étant réintroduites dans la colonne montante, ce qui permet d'établir une circulation de polymère entre la colonne montante et la colonne descendante.

2. Procédé selon la revendication 1, les deux zones de polymérisation interconnectées étant mises en œuvre de manière telle que le mélange gazeux provenant de la colonne montante est totalement ou partiellement empêché d'entrer dans la colonne descendante par l'introduction, dans la partie supérieure de la colonne descendante, d'un flux de liquide et/ou de gaz, appelé "flux barrière", présentant une composition différente de celle du mélange gazeux présent dans la colonne montante.

3. Procédé selon la revendication 2, une ou plusieurs lignes d'alimentation pour le flux barrière étant placées dans la colonne descendante près de la limite supérieure du volume occupé par les particules de polymère s'écoulant vers le bas sous une forme densifiée.

4. Procédé selon la revendication 2 ou 3, le flux barrière comprenant du propane.

**5.** Procédé selon la revendication 4, le flux barrière comprenant :

   i. 10 à 100% en mole de propylène ;
   ii. 0 à 80% en mole d'éthylène ;
   iii. 0 à 30% en mole de propane ;
   iv. 0 à 5% en mole d'hydrogène.

**6.** Procédé selon la revendication 5, la composition du flux barrière provenant de la condensation et/ou de la distillation d'une partie d'un flux gazeux recyclé en continu par l'intermédiaire d'une ligne de recyclage de gaz vers le réacteur présentant deux zones de polymérisation interconnectées.

**7.** Procédé selon l'une quelconque des revendications précédentes, des débits de composition antistatique étant introduits dans le réacteur au niveau du fond de la colonne montante ou dans la ligne de recyclage de gaz.

**8.** Procédé selon l'une quelconque des revendications précédentes, le réacteur présentant deux zones de polymérisation interconnectées étant placé en amont ou en aval d'un ou de plusieurs autres réacteurs de polymérisation basés sur des technologies classiques en phase liquide et/ou en phase gazeuse, donnant ainsi lieu à un procédé de polymérisation à plusieurs étages séquentiels.

**9.** Procédé selon l'une quelconque des revendications précédentes, qui est effectué en présence d'un catalyseur Ziegler-Natta comprenant:

   i. un constituant catalytique solide comprenant Mg, Ti, halogène et un composé donneur d'électrons appelé « donneur interne »,
   ii. un composé d'alkylaluminium et
   iii. éventuellement, un composé donneur d'électrons appelé « donneur externe».

**10.** Procédé selon la revendication 8, le rapport molaire entre le constituant catalytique solide et le composé d'alkylaluminium introduit dans le réacteur de polymérisation étant de 0,05 à 3.

Fig. 1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1012195 B1
- WO 2009080660 A
- WO 2011144489 A
- WO 2012031986 A
- WO 2011029735 A
- EP 1012195 A1
- EP 728769 B1
- EP 782587 A

### Non-patent literature cited in the description

- **D. GELDART.** Gas Fluidisation Technology. J. Wiley & Sons Ltd, 1986, 155
- **C. J. CARMAN ; R. A. HARRINGTON ; C. E. WILKES.** Monomer Sequence Distribution in Ethylene-Propylene Rubber Measured by 13C NMR. 3. Use of Reaction Probability Mode. *Macromolecules,* 1977, vol. 10, 536
- **M. KAKUGO ; Y. NAITO ; K. MI-ZUNUMA ; T. MIYATAKE.** Carbon-13 NMR determination of monomer sequence distribution in ethylene-propylene copolymers prepared with $\delta$-titanium trichloride- diethylaluminum chloride. *Macromolecules,* 1982, vol. 15, 1150
- **C.J. CARMAN ; R.A. HARRINGTON ; C.E. WILKES.** *Macromolecules,* 1977, vol. 10, 536